Europäisches Patentamt

European Patent Office

Office européen des brevets

(19)

(11)  EP 1 443 471 A2

(12)  EUROPEAN PATENT APPLICATION

(43) Date of publication:
04.08.2004  Bulletin 2004/32

(51) Int Cl.7: G07C 9/00

(21) Application number: 04250529.7

(22) Date of filing: 30.01.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 31.01.2003 JP 2003024501

(71) Applicant: Kabushiki Kaisha Toshiba
Tokyo 105-8001 (JP)

(72) Inventors:
• Sata, Yutaka IP Div., Kabushiki Kaisha Toshiba
  Tokyo 105-8001 (JP)
• Sugikawa, Akihiko IP Div., Toshiba Corporation
  Tokyo (JP)

(74) Representative: Maury, Richard Philip
MARKS & CLERK,
57-60 Lincoln's Inn Fields
London WC2A 3LS (GB)

(54)  **Authentication processing system, terminal authentication apparatus, authentication processing method and authentication processing program**

(57)    An authentication apparatus, comprising: an existence confirmation signal receiver which in order to receive an existence confirmation signal outputted from a portable information terminal at a first time interval, is set to a reception mode capable of receiving said existence confirmation signal at a second time interval, only during a third time interval equal to or longer than said first time interval; an existence notice signal transmitter which transmits said existence notice signal serving as response of said existence confirmation signal to said portable information terminal when said existence notice signal is received; a link connection unit configured to establish a wireless link with said portable information terminal after said existence notice signal has been received by said portable information terminal; an authentication unit configured to conduct authentication with said portable information terminal through said wireless link; and a control command transmitter which transmits a control command for an operation apparatus which conducts a prescribed operation when said authentication has been succeeded.

FIG. 1

**Description**

CROSS REFERENCE TO RELATED APPLICATIONS

This application claims benefit of priority under 3SUSC§119 to Japanese Patent Application No. 2003-24501, filed on January 31, 2003, the entire contents of which are incorporated by reference herein.

BACKGROUND OF THE INVENTION

Field of the Invention

The present invention relates to an authentication processing system in which authentication is performed between a portable information terminal and a terminal authentication apparatus and upon success in authentication, predetermined operation is permitted.

Related Background Art

The keyless system, which does not require locking and unlocking using a physical key, and can lock and unlock car doors at some distance, has spread. A typical keyless system executes an authentication protocol between a key a user has and a radio authentication module installed on a car by using a feeble radio wave having a frequency of 300 MHz or less. If the authentication is successful, the typical keyless system transmits a door locking signal or a door unlocking signal from the radio authentication module to the car. Feeble radio wave base stations are stipulated by a law, and they are permitted to send a radio wave within a range of approximately 10mas long as its frequency is approximately 300 MHz without a license for a radio station.

In a keyless system that has spread the most widely, the user needs to press a button disposed on a key, when the user wants to unlock (lock) doors. In other words, user experience is conducted according to the following procedure.

(1) The user approaches the car. (2) The user searches a pocket or a bag for a key. (3) The user takes out the key. (4) The user depresses a button on the key (unlocking). (5) If the user operates the button, a radio wave is transmitted from a radio module incorporated in the key.

On the other hand, the radio authentication module installed on the car attempts to receive a radio wave from the key at regular time intervals. Therefore, if the user operates the button on the key and the radio wave sent from the key is received by the radio authentication module, then the authentication protocol is executed and the doors are unlocked (locked). If the button on the key is not operated, the radio wave is not transmitted from the key. Therefore, the life of a battery incorporated in the key (which is in the range of two to five years in typical use) can be lengthened.

There is a problem in unlocking doors using a radio wave. For example, in order to prevent false unlocking, doors are automatically locked a fixed time after unlocking. If, for example, it takes a long time in loading items into the car after doors are unlocked to get into the car the doors are automatically locked, resulting in inconvenience. Invention attempting to solve such a problem is also shown (see Japanese Patent Application No. 2001-115707).

The button operation on the key is operation to suppress the power consumption of the battery on the key and lengthening the life of the battery. However, this operation lowers the user's convenience. In other words, in the case where the user has an umbrella or a pack in a hand of the side of the pocket having the key therein, or in the case where both hands of the user are used to hold packs or the like, the user needs to carry back the umbrella or the pack, or put the packs somewhere.

In order to solve these problems of the inconvenience, a keyless system that makes the button operation unnecessary is also proposed. In this system, basically the same feeble radio wave as that described above is used, the key side also comes in a radio wave sending mode and a reception mode at regular time intervals. If the car enters a radio wave arrival range for the key, an authentication, protocol is automatically executed and the doors are unlocked.

As for an authentication (cryptograph) algorithm used in the authentication protocol for the abowe-described keyless system, the common key system is typically used. If a system is constructed by using the most advanced cryptograph algorithm, such as AES, and a key having a sufficiently long key length, it is impossible to find the key in a practical time and unlock the doors by using the calculation capability of existing computers. This also results in a feature that the degree of the safety is higher as compared with ordinary physical keys.

A product making the most of the cryptograph algorithm and igniting the car engine by using the cryptograph algorithm has also been developed. In this ignition key system typically called immobilizer, the user inserts the key in the ignition hole and turns the key so as to reach the predetermined position, and a current signal flows between the key hole and the key, an authentication protocol being executed between an authentication module incorporated in the key and am immobilizer ECU directly coupled to an engine ECU.

As described above, various techniques have been introduced in the car keys in order to improve the convenience and the security. In the current car key systems, however, door unlocking, door locking and engine start cannot be conducted if the user does not carry the key dedicated to the car with the user. As a thing the current user daily carries with the user, there is a portable information terminal represented by a portable telephone or a PDA. The portable telephone makes it possible to talk with a fixed telephone or another portable telephone and access the Internet via a radio base station installed by a portable telephone service providers. In recent years, a trend of mounting a second radio communication apparatus on the portable telephone has appeared. The second radio communication apparatus has, in principle, a radio wave arrival range of close vicinity to approximately 100 m, and makes possible communication with another terminal without using a base station provided by a radio telephone service providers.

Attention is paid to the Bluetooth (TM), in which the ISM band around 2.4 GHz and neighboring frequencies are used and the radio license is not necessary like the case of the feeble power radio machine. The effective transmission distance range of the conventional radio LAN is at least 100 m. On the other hand, in the Bluetooth, the transmission range is narrow, and accordingly power consumption is low. Therefore, the Bluetooth is suitable for information processing apparatuses, such as portable telephones, having a constraint in battery. In recent years, portable information processing apparatuses (hereafter referred to simply as portable information terminals), such as portable telephones and PDAs, on which Bluetooth communication means is mounted, have begun to be spread. As for details of the Bluetooth, specifications can be obtained from the web site, http://www.bluetooth.org/.

If door unlocking and locking and engine ignition start are conducted in a car or the like by using the Bluetooth or a radio communication apparatus mounted on a portable information terminal as a keyless system, it becomes unnecessary for a user to carry a key dedicated to a car, convenience for the user being improved. However, a main object of the radio communication apparatus mounted on the portable information terminal is not to unlock or lock doors, but to transmit information at a high transfer rate. Therefore, there are the following problems in its application to the keyless system.

A first problem is power consumption. As described above, the radio communication apparatus mounted on the portable information terminal is designed with the object of high-rate data transfer. As compared with the low-rate, low-frequency radio module used in the current keyless system or the like, power consumption is extremely high. From the viewpoint of the power consumption and the battery life in the portable information terminal, therefore, it is difficult to implement a system in which doors are automatically unlocked when the user has approached thecar. In the case where the Bluetooth is used, the power consumed especially while a specific terminal is searched and a wireless link is established is as large as at least 1.5 times that at ordinary time.

A second problem is the radio wave arrival range. It is possible to design and implement an ordinary keyless system having an optimum radio wave arrival range of, for example, approximately 10m with the object of unlocking and locking doors. However, the radio communication apparatus in the portable information terminal is designed with the object of data transfer. Furthermore, in many cases, the radio wave arrival range is determined almost completely by radio standards. Therefore, it is difficult to set a radio wave arrival range that is optimum as the keyless system. In the case of the Bluetooth, a module according to standards of class 3 is typically mounted on the portable information terminal. However, its radio wave arrival range is effectively as large as approximately 20m. Therefore, even if the user just passes an area within a short distance from a car without the intention of approaching the car, there is a possibility that the authentication protocol will be executed and the doors will be unlocked.

SUMMARY OF THE INVENTION

An object of the present invention is to provide an authentication processing system, a terminal authentication apparatus, an authentication processing method, and authentication processing program capable of reducing power consumption, with high security.

According to the present invention, an authentication processing system according to one embodiment of the present invention, comprising:

a portable information terminal;
a terminal authentication apparatus which conducts authentication processing by air; and
an operation apparatus which conducts a prescribed operation when said terminal authentication apparatus has succeeded in authentication with said portable information terminal,

wherein said portable information terminal includes:

an existence confirmation signal transmission unit configured to transmit an existence confirmation signal to confirm whether or not said terminal authentication apparatus exists, at a time interval #1;
an existence notice signal reception unit configured to receive an existence notice signal transmitted from said terminal authentication apparatus in response to said existence confirmation signal;
a first link connection unit configured to establish a wireless link with said terminal authentication apparatus which has transmitted said existence notice signal when said existence notice signal is received; and
a first authentication unit configured to conduct a first authentication with said terminal authentication apparatus through said wireless link,

wherein said terminal authentication apparatus includes:

an existence confirmation signal reception unit set to a reception mode capable of receiving said existence confirmation signal at a time interval #2 only during a time interval #3 equal to or longer than said time interval #1;

an existence notice signal reception unit configured to transmit said existence notice signal serving as response of said existence confirmation signal to said portable information terminal when said existence confirmation signal is received;

a second link connection unit configured to establish a wireless link with said portable information terminal after said portable information terminal receives said existence notice signal;

a second authentication unit configured to conduct said first authentication with said portable information terminal through said wireless link; and

a control command transmission unit configured to transmit a control command for said operation apparatus when said first and second authentication units succeed in said first authentication,

wherein said operation apparatus includes:

a control command reception unit configured to receive said control command; and

an operation conduction unit configured to conduct said prescribed operation based on said control command.

Furthermore, an authentication apparatus according to one embodiment of the present invention, comprising:

an existence confirmation signal receiver which in order to receive an existence confirmation signal outputted from a portable information terminal at a time interval #1, is set to a reception mode capable of receiving said existence confirmation signal at a time interval #2, only during a time interval #3 equal to or longer than said time interval #1;

an existence notice signal transmitter which transmits said existence notice signal serving as response of said existence confirmation signal to said portable information terminal when said existence notice signal is received;

a link connection unit configured to establish a wireless link with said portable information terminal after said existence notice signal has been received by said portable information terminal;

an authentication unit configured to conduct authentication with said portable information terminal through said wireless link; and

a control command transmitter which transmits a control command for an operation apparatus which conducts a prescribed operation when said authentication has been succeeded.

BRIEF DESCRIPTION OF THE DRAWINGS

FIG. 1 is a block diagram showing a general configuration of an authentication processing system according to a first embodiment of the present invention.

FIG. 2 is an operation timing diagram of the portable information terminal 1, the terminal authentication module 2 and the entry terminal 3.

FIG. 3 is a diagram showing a relation between a representative radius indicating a radio wave arrival range for the terminal authentication module 2 and a representative moving speed of the portable information terminal 1.

FIG. 4 is a block diagram showing a entire configuration of an authentication processing system according to a second embodiment of the present invention.

FIG. 5 is a block diagram showing a general configuration of an authentication processing system according to a third embodiment of the present invention.

FIG. 6 is a sequence diagram for the authentication processing system shown in FIG. 5.

FIG. 7 is a block diagram of a fourth embodiment of an authentication processing system according to the present invention.

FIG. 8 is a flow chart showing a processing procedure conducted in the interval control unit 19 in the portable information terminal 1.

FIG. 9 is a block diagram showing a general configuration of a fifth embodiment of an authentication processing system according to the present invention.

FIG. 10 is a flow chart showing a processing procedure in the authentication processing system of the fifth embodiment.

FIG. 11 is a block diagram showing overall configuration in the case of providing the contact type approach sensing sensor in the terminal authentication module.

DESCRIPTION OF THE PREFERRED EMBODIMENTS

Hereafter, an embodiment of an authentication processing system according to the present invention will be described with reference to the drawings.

(First Embodiment)

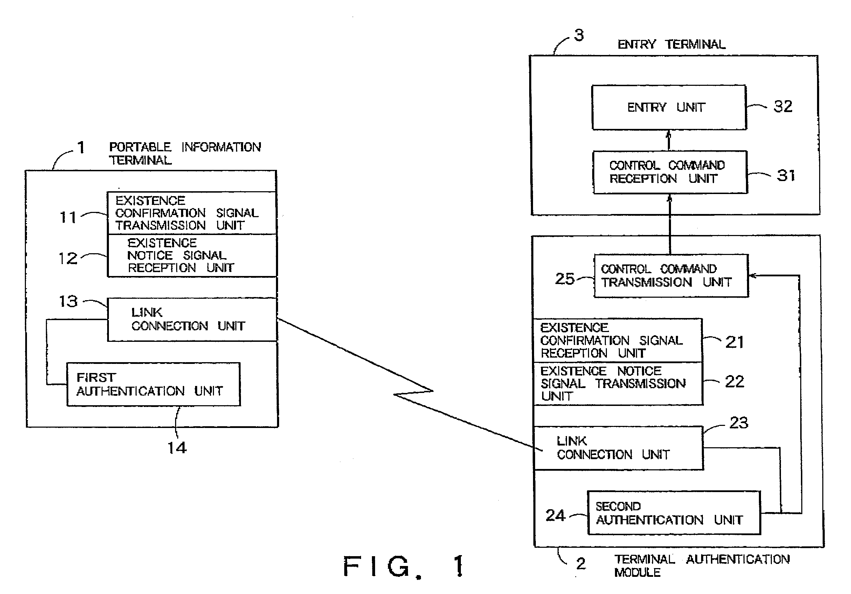

FIG. 1 is a block diagram showing a general configuration of an authentication processing system according to a first embodiment of the present invention. A configuration of a system to implement keyless entry for a vehicle is shown in FIG. 1. The authentication processing system shown in FIG. 1 includes a portable information terminal 1, a terminal authentication module 2 which conducts authentication processing with the portable information terminal 1 by radio, and an entry terminal 3 which conducts entry operation for the vehicle when the terminal authentication module 2 has succeeded in the authentication with the portable information terminal 1.

The portable information terminal 1 includes an existence confirmation signal transmission unit 11 which transmits an existence confirmation signal in order to determine whether or not the terminal authentication module 2 exists, an existence notice signal reception unit 12 which receives an existence notice signal transmitted from the terminal authentication module 2 in response to the existence confirmation signal, a link connection unit 13 which establishes a wireless link with the terminal authentication module 2 that has transmitted the existence notice signal, and a first authentication unit 14 which conducts first authentication with the terminal authentication module 2 via the wireless link.

Furthermore, the terminal authentication module 2 includes an existence confirmation signal reception unit 21 which receives the existence confirmation signal, an existence notice signal transmission unit 22 which transmits the existence notice signal in response to the existence confirmation signal, a link connection unit 23 which establishes a wireless link with the portable information terminal 1 after the existence notice signal has been received by the portable information terminal 1, a second authentication unit 24 which conducts the first authentication with the portable information terminal 1 via the wireless link, and a control command transmission uni t 25 which transmits a control command to the entry terminal 3 when the first authentication has succeeded.

The entry terminal 3 includes a control command reception unit 31 which receives the control command, and an entry unit 32 which executes predetermined entry operation on the basis of the control command. Here, the predetermined entry operation is operation such as door unlocking or ignition start.

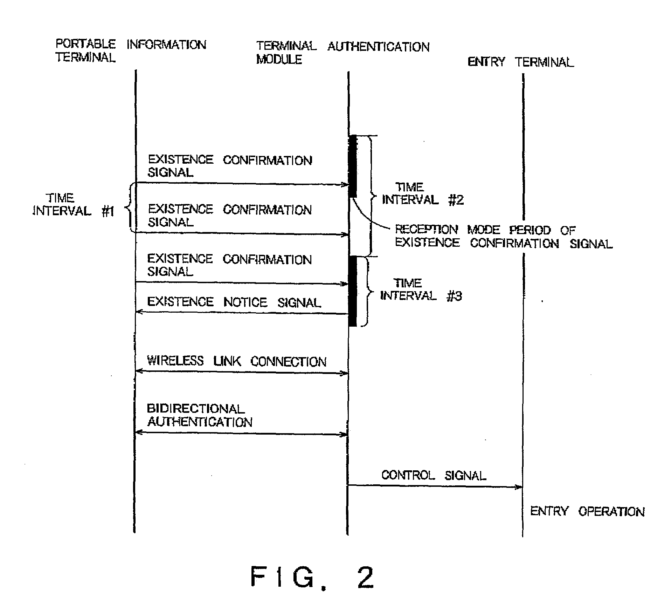

FIG. 2 is an operation timing diagram of the portable information terminal 1, the terminal authentication module 2 and the entry terminal 3. As shown in FIG. 2, the portable information terminal 1 transmits an existence confirmation signal at time intervals #1. The terminal authentication module 2 comes in a reception mode to receive the existence confirmation signal during a time interval #3, which is equal to or longer than the time interval #1, at time intervals #2 , The terminal authentication module 2 receives the existence confirmation signal only when it is set to the reception mode.

In an interval indicated by a dotted line in FIG. 2, it is indicated that the terminal authentication module 2 does not exist in the radio wave arrival range for the portable information terminal 1. Therefore, even if the portable information terminal transmits the existence confirmation signal during the interval indicated by the dotted line, the terminal authentication module 2 does not transmit an existence notice signal. Therefore, the portable information terminal 1 transmits the existence confirmation signal repetitively.

However, the time interval #3 is set equal to or longer than the time interval #1. Therefore if the portable information terminal 1 and the terminal authentication module 2 are located in the radio wave arrival range with each other, the terminal authentication module 2 can receive the existence confirmation signal from the portable information terminal 1 within a predetermined time reliably.

The portable information terminal 1 and the terminal authentication module 2 conduct the radio wave transmission and reception byusing, for example, the Bluetooth. In the Bluetooth, transmission of the existence confirmation signal corresponds to a page mode, and reception of the existence confirmation signal corresponds to a page scan mode. If the page mode or the page scan mode is assumed continuously in time, however, the power consumption in the Bluetooth module becomes large. On the other hand, in the present embodiment, the portable information terminal 1 transmits the existence confirmation signal at the time intervals #1 , and the terminal authentication module 2 is set to the reception mode only during the time interval #3 at the time intervals #2. Therefore, as compared with the case where the existence confirmation signal is transmitted and received continuously in time, the power consumption can be reduced.

Upon receiving the existence confirmation signal from the portable information terminal 1, the existence confirmation signal reception unit 21 in the terminal authentication module 2 immediately transmits the existence notice signal to the portable information terminal 1. Upon receiving the existence notice signal from the terminal authentication module 2, the portable information terminal 1 outputs a link connection request to the terminal authentication module 2 by using the link connection unit 13. As a result, a wireless link connection transaction is executed with the link connection unit 23 in the terminal authentication module 2, and a wireless link is established.

Subsequently, on a wireless link, a transaction for bidirectional authentication (the first authentication) is executed between the first authentication unit 14 in the portable information terminal 1 and the second authentication unit 24 in the terminal authentication module 2. If the bidirectional authentication has succeeded, the control command transmission unit 25 in the terminal authentication module 2 is notified that the first authentication has finished normally. The control command transmission unit 25 transmits a control command to the control command reception unit 31 in the entry terminal 3. Upon receiving the control command, the entry terminal 3 conducts predetermined entry operation. For example, if the entry terminal 3 is a car and the entry unit 32 is a door lock control unit, doors are unlocked after the control command has been received.

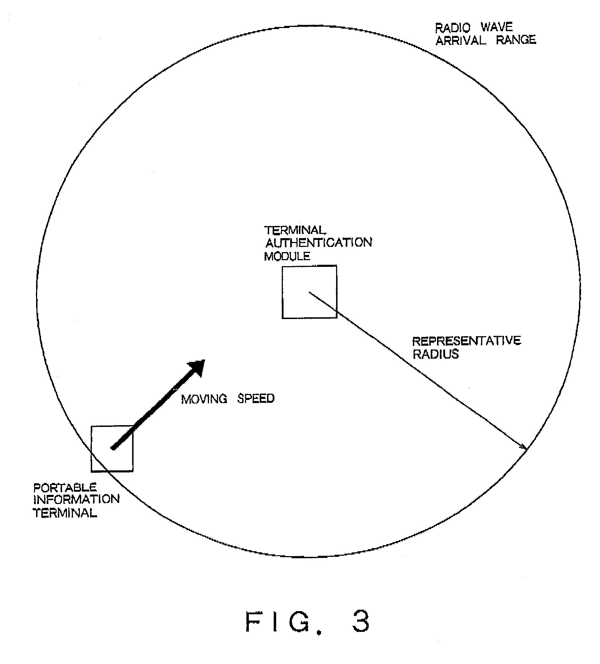

FIG. 3 is a diagram showing a relation between a representative radius indicating a radio wave arrival range for the terminal authentication module 2 and a representative moving speed of the portable information terminal 1. If the the time interval #1 to #3 as shown in FIG. 2 are set, a statistical average time and a statistical maximum time since the portable information terminal has come into the radio wave arrival range until the portable information terminal 1 receives the existence notice signal from the terminal authentication module 2 are represented by the following equations, respectively.

$$\text{Average reception time}$$
$$= (\text{time interval \#1} + \text{time interval \#2}) /2 \quad (1)$$

$$\text{Maximum time}$$
$$= (\text{time interval \#1} + \text{time interval \#2}) \quad (2)$$

It is now supposed that the portable information terminal 1 approaches the terminal authentication module 2 at the representative speed in order to conduct entry into an entry terminal 3, which is not illustrated. If in this case the representative radius of the radio wave arrival range is greater than the product of the maximum time indicated by the equation (2) and the representative speed, the portable information terminal 1 can sense the existence of the terminal authentication module 2 before the portable information terminal 1 approaches the entry terminal 3, execute the predetermined authentication protocol, and cause the entry terminal 3 to conduct the entry operation.

Thus, in the first embodiment, the portable information terminal 1 transmits the existence confirmation signal at the time intervals #1, and the terminal authentication module 2 is set to the reception mode to receive the existence confirmation signal only during the time interval #3 at time intervals #2. As a result, the power consumption can be reduced in both the portable information terminal 1 and the terminal authentication module 2. Furthermore, only in the case where the authentication between the portable information terminal 1 and the terminal authentication module 2 has succeeded, the entry operation in the entry terminal 3 is permitted, the security performance being improved. Furthermore, since the time interval #3 is set equal to or longer than the time interval #1, the terminal authentication module 2 can receive the existence confirmation signal within the predetermined time reliably, and the time required to establish a link between the portable information terminal 1 and the terminal authentication module 2 can be shortened.

(Second Embodiment)

In the first embodiment, the example in which the portable information terminal 1 transmits the existence confirmation signal and the terminal authentication module 2 transmits the existence notice signal in response to the existence confirmation signal has been described. In a second embodiment described hereafter, the terminal authentication module 2 transmits the existence confirmation signal and the portable information terminal 1 transmits the existence notice signal.

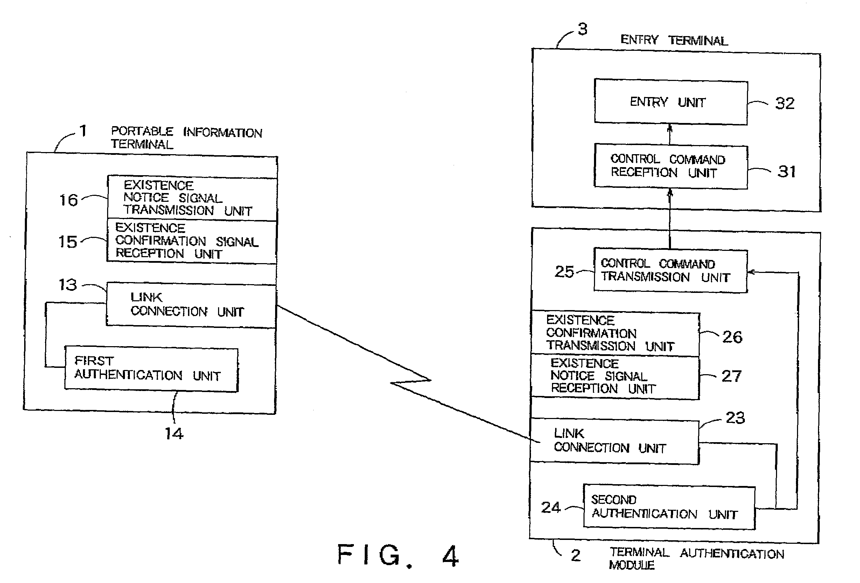

FIG. 4 is a block diagram showing a entire configuration of an authentication processing system according to a second embodiment of the present invention. In FIG. 4 , components common to those shown in FIG. 1 are denoted by like reference numerals. Hereafter, different points will be mainly described.

The portable information terminal 1 shown in FIG. 4 includes an existence confirmation signal reception unit 15, an existence notice signal transmission unit 16, a link connection unit 13, and a first authentication unit 14. The terminal authentication module 2 includes an existence confirmation signal transmission unit 26, an existence notice signal reception unit 27, a link connection unit 23, and a second authentication unit 24.

The existence confirmation signal transmission unit 26 in the terminal authentication module 2 transmits an existence confirmation signal to the portable information terminal 1 at time intervals #1. The portable information terminal 1 is set to a reception mode, in which the portable information terminal 1 can receive an existence confirmation signal, only during the time interval #3 at the time intervals #2. If in this reception mode interval the existence confirmation signal is received by the existence confirmation signal reception unit 15 in the portable information terminal 1, an existence notice signal transmission unit 16 transmits an existence notice signal. If the existence notice signal reception unit 27 in the terminal authentication module 2 receives the existence notice signal, processing of connecting a wireless link is conducted between the portable information terminal 1 and the terminal authentication module 2.

Thus, in the second embodiment as well, delivery of the existence confirmation signal is conducted between the portable information terminal 1 and the terminal authentication module 2 at predetermined time intervals. Power consumption can be reduced in both the portable information terminal 1 and the terminal authentication module 2.

(Third Embodiment)

In a third embodiment, the distance between the portable information terminal 1 and the terminal authentication module 2 is measured.

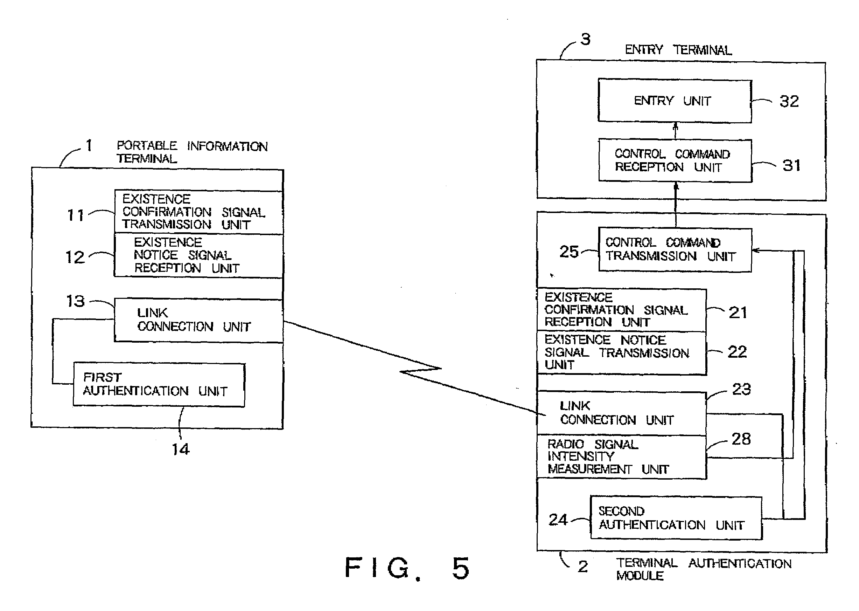

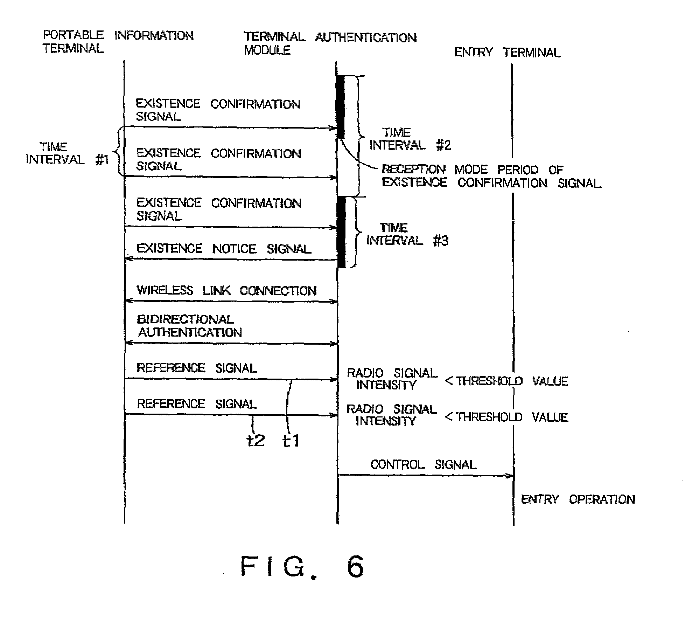

FIG. 5 is a block diagram showing a general configuration of an authentication processing system according to a third embodiment of the present invention. FIG. 6 is a sequence diagram for the authentication processing system shown in FIG. 5. The terminal authentication module 2 in the authentication processing system shown in FIG. 5 further includes a Radio signal intensity measurement unit 28 in addition to the configuration shown in FIG. 1.

The radio signal intensity measurement unit 28 measures a field intensity of a reference signal transmitted from the portable information terminal 1, and compares a measured value with a preset threshold value (time t1 and t2 shown in FIG. 6) . If the measured value of the field intensity is greater than the threshold value, then theportable information terminal 1 is judged to have approached the terminal authentication module 2, and the field intensity measurement unit 28 notifies the control command transmission unit 25 to that effect. If the first authentication has succeeded and the portable information terminal 1 is judged to have approached the terminal authentication module 2, the control command transmission unit 25 sends a control command to the control command reception unit 31 in the entry terminal 3.

If the radio wave arrival range of the portable information terminal 1 and the terminal authentication module 2 is larger than a distance optimum to the operation in the entry terminal 3, it is possible to perform control so as to permit the entry operation in the entry terminal 3 only when the portable information terminal 1 is in the optimum distance.

By the way, the field intensity measurement unit 28 may be provided within the portable information terminal 1 instead of within the terminal authentication module 2. A distance measurement unit which measures the distance from the portable information terminal 1 may be provided within the entry terminal 3. The distance measurement unit may measure the distance on the basis of the field intensity in the same way as the Radio Signal intensity measurement unit 28, may measure the distance on the basis of a delay time taken until a transmitted radio wave returns, or may measure the distance by using infrared rays or the like. Or the distance measurement unit may sense that the user having the portable information terminal 1 has contacted by using a contact sensing sensor. For example, in the case of a vehicle, more specifically, the contact sensing sensor is a touch sensor provided on a door knob or an infrared ray sensor provided in the entry terminal 3.

If the distance measurement unit is provided within the entry terminal 3, after the bidirectional authentication between the portable information terminal 1 and the terminal authentication module 2 has finished normally, the terminal authentication module 2 sends a control command to the entry terminal 3. After the entry terminal 3 has received the control command in the control command reception unit 31, the entry terminal 3 senses approach of the portable information terminal 1 by using the distance measurement unit, and conducts predetermined entry operation.

Thus, in the third embodiment, sensing is conducted to determine whether or not the portable information terminal 1 has approached, and the entry operation in the entry terminal 3 is permitted only in the case where the portable information terminal 1 has approached within the predetermined distance. Therefore, even if the radio wave arrival range shown in FIG. 3 is wide and the authentication has succeeded although the portable information terminal 1 is distant, the entry operation in the entry terminal 3 can be inhibited until the portable information terminal 1 approaches, resulting in improved security performance.

(Fourth Embodiment)

In a fourth embodiment, the above-described time intervals #1 to #3 are controlled according to the remaining electric capacity in the battery.

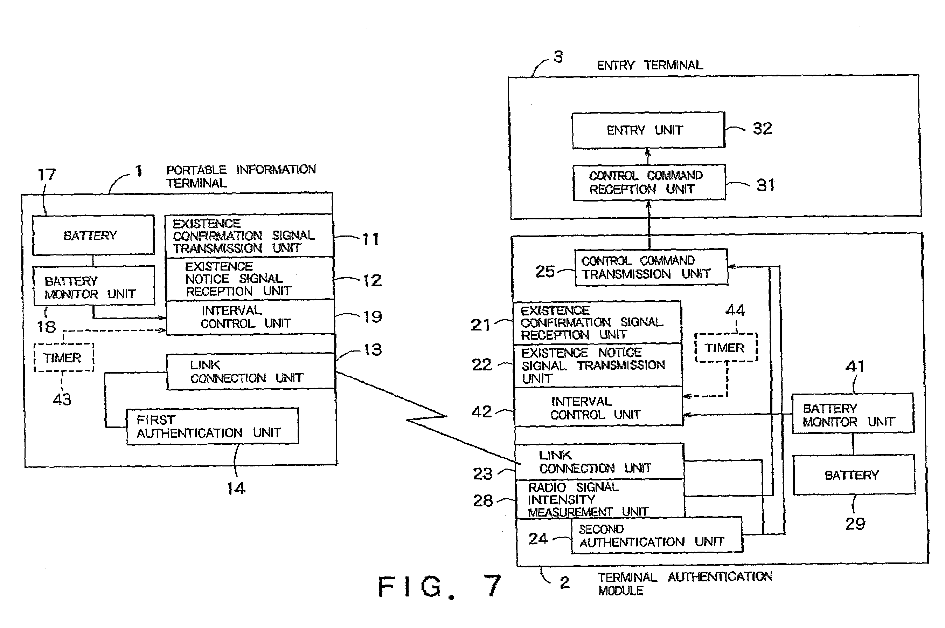

FIG. 7 is a block diagram of a fourth embodiment of an authentication processing system according to the present invention. The portable information terminal 1 shown in FIG. 7 includes, in addition to the configuration shown in FIG. 5, a battery 17 which serves as a main power supply for the portable information terminal 1, a battery monitor unit 18 which monitors the remaining electric capacity in the battery 17, and an interval control unit 19 which adjusts the time interval #1 serving as the time interval in transmitting existence confirmation signals.

The terminal authentication module 2 shown in FIG. 7 includes, in addition to the configuration shown in FIG. 5, a battery 29 serving as a main power supply for the terminal authentication module 2, a battery monitor unit 41 to monitor the remaining electric capacity in the battery 29, and an interval control unit 42. The interval control unit 42 adjusts the time length of at least one of the time interval #2 serving as the time intervals at which the reception mode is set to receive the existence confirmation signal, and the time interval #3 serving as the interval for the reception mode.

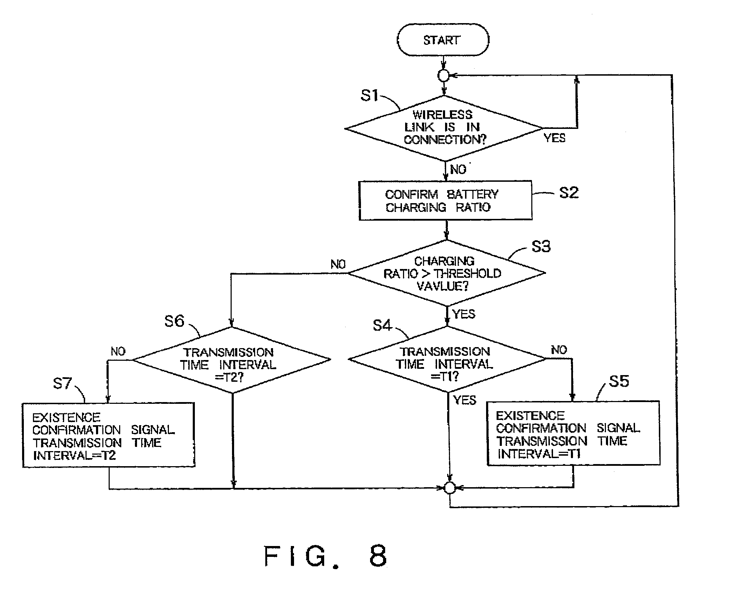

FIG. 8 is a flow chart showing a processing procedure conducted in the interval control unit 19 in the portable information terminal 1. First, it is determined whether or not a wireless link is connected to the terminal authentication module 2 (step S1). If the wireless link is in connection, the processing remains in the step S1. If the wireless link is not in connection, the battery monitor unit 18 confirms the remaining electric capacity in the battery 17 (step S2).

Subsequently, it is determined whether or not the remaining electric capacity in the battery 17 is greater than a predetermined threshold value (step S3) . If the remaining electric capacity in the battery 17 is larger than the predetermined threshold value, it is determined whether or not the time interval #1 is equal to a predetermined value T1 (step S4) . If the time interval #1 is equal to the predetermined value T1, the processing returns to the step S1 without altering the time interval #1. If the time interval #1 is not equal to the predetermined value T1, the time interval #1 is set equal to the predetermined value T1 (step S5) and the processing returns to the step S1.

On the other hand, if the remaining electric capacity in the battery 17 is judged at the step S3 to be less than or equal to the predetermined threshold value, it is determined whether or not the time interval #1 is equal to a predetermined value T2 (step S6) . If the first time interval is equal to the predetermined value T2, the processing returns to the step S1 without altering the time interval #1. If the time interval #1 is not equal to the predetermined value T2, the time interval #1 is set equal to the predetermined value T2 (step S7) and the processing returns to the step S1.

More specifically, as remaining electric capacity in the battery 17 decreases, the interval control unit 19 in the portable information terminal 1 lengthens the time interval #1 and thereby decreases the power consumption in the portable information terminal 1. On the other hand, if there is a margin in the remaining electric capacity in the battery 17, it is possible to shorten the time interval #1 and thereby shorten the time taken until a wireless link to the terminal authentication module 2 is established.

The interval control unit 42 in the terminal authentication module 2 also conducts processing similar to that in FIG. 6. Coincidentally, the interval control unit may be provided in only one of the portable information terminal 1 and the terminal authentication module 2.

If the portable information terminal 1 and the terminal authentication module 2 adjust the time intervals #1 to #3 independently of each other, the time interval #1 serving as the transmission interval for the existence confirmation signal might become longer than the time interval #3 serving as the reception mode duration interval for the terminal authentication module 2. In this case, it becomes Impossible for the terminal authentication module 2 to receive an existence confirmation signal from the portable information terminal 1.

Therefore, the interval control unit 19 in the portable information terminal 1 needs to adjust the time interval #1 within such a range that the first time interval becomes shorter than or equal to the time interval #3.

Thus, in the third embodiment, the interval control unit 19 in the portable information terminal 1 and the interval control unit 42 in the terminal authentication module 2 control at least one of the time intervals #1 to #3 according to the remaining electric capacity in the battery 17 and 29. Therefore, it is possible to reduce the power consumption in the portable information terminal 1 and the terminal authentication module 2 when the remaining electric capacity in the battery 17 and 29 has decreased.

As represented by dotted lines in FIG. 7, a timer 43 or 44 may be provided in at least one of the portable information terminal 1 and the terminal authentication module 2. The timer 43 or 44 measures the time elapsed since, for example, the wireless link is disconnected, and the time intervals #1 to #3 are set on the basis of the measured time elapsed.

(Fifth Embodiment)

In a fifth embodiment, authentication is conducted doubly.

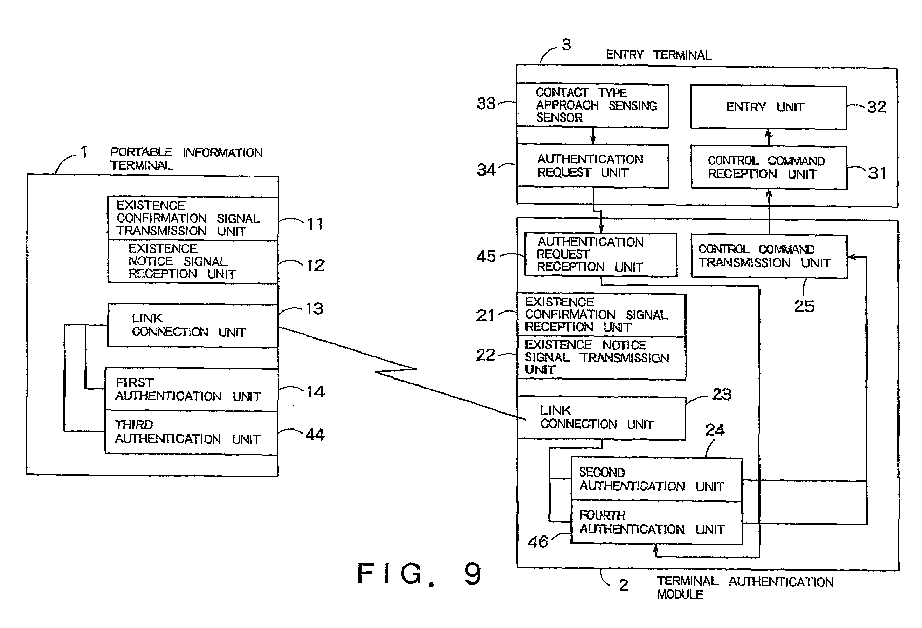

FIG. 9 is a block diagram showing a general configuration of a fifth embodiment of an authentication processing system according to the present invention. The portable information terminal 1 shown in FIG. 9 includes , in addition to the configuration shown in FIG. 1, a third authentication unit 44 which conducts second authentication with the terminal authentication module 2 after the terminal authentication module 2 has transmitted a control command to the entry terminal 3.

The terminal authentication module 2 shown in FIG. 9 includes, in addition to the configuration shown in FIG. 1, an authentication request reception unit 45 which receives an authentication request from the entry terminal 3, and a fourth authentication unit 46 which conducts second authentication with the portable information terminal 1 after a control command has been transmitted to the entry terminal 3. The entry terminal 3 shown in FIG. 9 includes, in addition to the configuration shown in FIG. 1, a contact type approach sensing sensor (contact detection sensor) 33 which detects that the user of the portable information terminal 1 has contacted the entry terminal 3, and an authentication request unit 34 which sends an authentication request to the terminal authentication module 2.

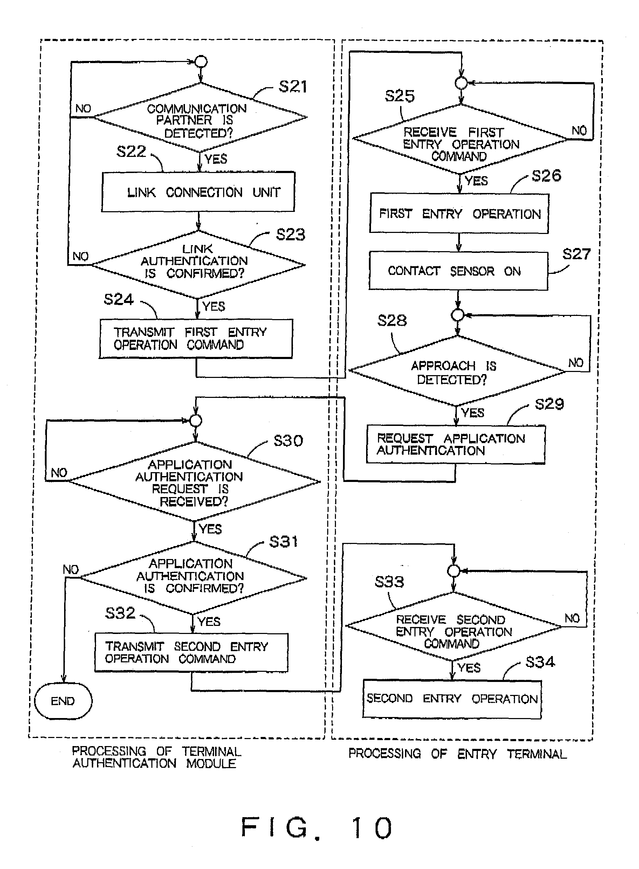

FIG. 10 is a flow chart showing a processing procedure in the authentication processing system of the fifth embodiment. First, the terminal authentication module 2 assumes the reception mode only during the time interval #3 at the time intervals #2, and determines whether or not an existence confirmation signal has been received from the portable information terminal 1 (step S21) .

If the existence confirmation signal has been received, then an existence notice signal is transmitted to the portable information terminal 1, and a wireless link to the portable information terminal 1 is established (step S22), and the second authentication 24 executes link authentication for, for example, the Bluetooth (step S23). If the bidirectional authentication (first authentication) has been confirmed by the link authentication, the control command transmission unit 25 transmits a control command to the entry terminal 3 in order to execute first entry operation in the entry terminal 3 corresponding to the first authentication (step S24).

Upon receiving the control command from the terminal authentication module 2 (step S25), the entry terminal 3 executes first entry operation (step S26) and simultaneously activates the contact type approach sensing sensor 33 (step S27). Here, the first entry operation is, for example, operation to unlock doors of a vehicle. At this point in time, ignition start is not permitted even if doors are unlocked.

If the contact type approach sensing sensor 33 senses the approach of the portable information terminal 1 (step S28), the authentication request unit 34 in the entry terminal 3 sends a second authentication request (application authentication request) to the terminal authentication module 2 (step S29).

If the authentication request reception unit in the terminal authentication module 2 receives this authentication request, the fourth authentication unit 46 executes application authentication (second authentication or application authentication) in a rank higher than the Bluetooth link (step S30) . This application authentication is an authentication procedure that is higher in safety than the authentication conducted by the second authentication unit 24.

If authentication attempted again has succeeded with the portable information terminal 1 (step S31), the control command transmission unit 25 transmits a control command to the entry terminal 3 in order to execute second entry operation corresponding to the second authentication (step S32).

If the control conmmand reception unit 31 in the entry terminal 3 has received this control command (step S33), the entry unit 32 executes the secondentry operation (step S34). Here, the second entry operation is operation to permit the ignition start. The user of the portable information terminal 1 can start the engine of the vehicle by conducting the processing of the step S34.

Thus, in the fourth embodiment, separate authentication operations are conducted respectively for a plurality of entry operations, and consequently the security performance can be further improved.

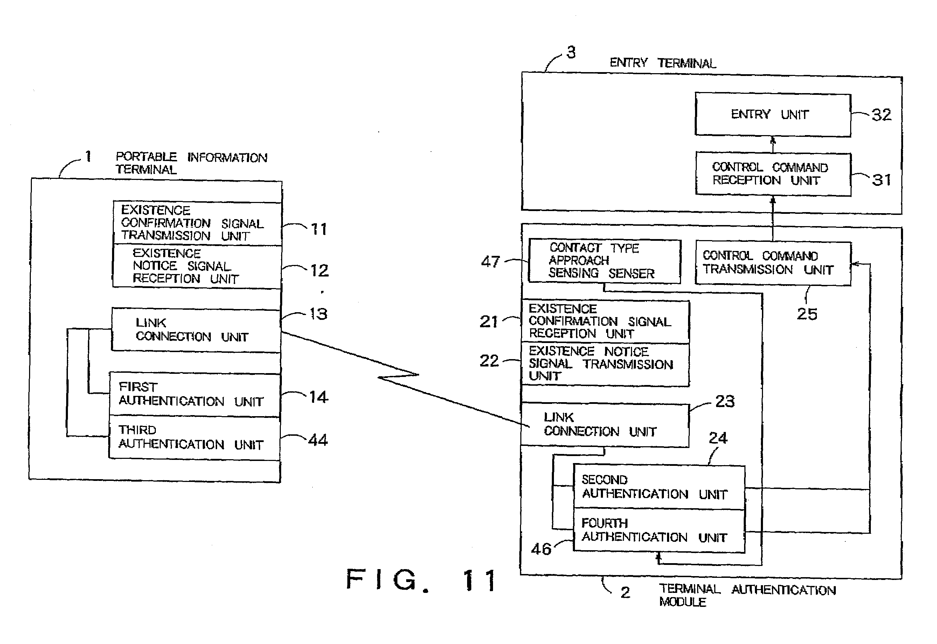

In the above-described authentication processing system shown in FIG. 9, the contact type approach sensing sensor 33 is provided in the entry terminal 3. However, the contact type approach sensing sensor may be provided in the terminal authentication module 2. In this case, a general configuration is represented by a block diagram shown in FIG. 11. As shown in FIG. 11, a contact type approach sensing sensor 47 is provided in the terminal authentication module2. If contact of theportable information terminal 1 is sensed by the contact type approach sensing sensor 47, the fourth authentication unit 46 is notified of the contact, and the fourth authentication unit 46 conducts the second authentication.

In the case of FIG. 11, it is not necessary to send an authentication request from the entry terminal 3 to the terminal authentication module 2, and consequently the configuration of the entry terminal 3 can be simplified.

In the fourth embodiment, it is also possible to provide three or more entry operations and conduct separate authentication operations respectively for the entry operations.

The authentication processing system described above in the embodiments may be implemented by hardware, or may be implemented by software. In the case where the authentication processing system is implemented by software, a program to implement the function of the authentication processing system may be stored on a recording medium, such as a floppy disk or a CD-RCM, or may be read by a computer to be executed thereby. The recording medium is not limited to a portable medium such as a magnetic disk or an optical disk, but may also be a stationary recording medium such as a hard disk device or a memory.

Furthermore, a program for implementing the function of the authentication processing program may also be distributed via a communication line (including radio communication) such as the Internet or the like. In addition, the program may be distributed in such a state that theprogramis encrypted, modulated or compressed, via a wired line, such as the Internet, or a radio line, or in a form stored in a recording medium.

## Claims

1. An authentication processing system, comprising:

    a portable information terminal;
    a terminal authentication apparatus which conducts authentication processing by air; and
    an operation apparatus which conducts a prescribed operation when said terminal authentication apparatus has succeeded in authentication with said portable information terminal,

    wherein said portable information terminal includes:

    an existence confirmation signal transmission unit configured to transmit an existence confirmation signal to confirm whether or not said terminal authentication apparatus exists, at a first time interval ;
    an existence notice signal reception unit configured to receive an existence notice signal transmitted from said terminal authentication apparatus in response to said existence confirmation signal;
    a first link connection unit configured to establish a wireless link with said terminal authentication apparatus which has transmitted said existence notice signal when said existence notice signal is received; and
    a first authentication unit configured to conduct a first authentication with said terminal authentication apparatus through said wireless link,

    wherein said terminal authentication apparatus includes:

an existence confirmation signal reception unit set to a reception mode capable of receiving said existence confirmation signal at a second time interval only during a third time interval equal to or longer than said first time interval;

an existence notice signal reception unit configured to transmit said existence notice signal serving as response of said existence confirmation signal to said portable information terminal when said existence confirmation signal is received;

a second link connection unit configured to establish a wireless link with said portable information terminal after said portable information terminal receives said existence notice signal;

a second authentication unit configured to conduct said first authentication with said portable information terminal through said wireless link; and

a control command transmission unit configured to transmit a control command for said operation apparatus when said first and second authentication units succeed in said first authentication,

wherein said operation apparatus includes:

a control command reception unit configured to receive said control command; and

an operation conduction unit configured to conduct said prescribed operation based on said control command.

2. The authentication processing system according to claim 1, wherein radio wave arrival ranges of said existence confirmation signal and said existence notice signal are longer than a distance obtained by multiplying a sum of said first and second time intervals by an average moving speed of said portable information terminal.

3. The authentication processing system according to claim 1, wherein at least one of said portable information terminal and said terminal authentication apparatus has a distance detection unit configured to detect a distance between said portable information terminal and said terminal authentication apparatus; and

said control command transmission unit transmits said control command to said operation apparatus when said first authentication i s succeeded and the distance between said portable information terminal and said terminal authentication apparatus is equal to or less than a prescribed value.

4. The authentication processing system according to claim 3, wherein said distance detection unit detects the distance based on field intensity of radio wave transmitted between said portable information terminal and said terminal authentication apparatus.

5. The authentication processing system according to claim 1, wherein at least one of said terminal authentication apparatus and said operation unit has an approach detector which detects that said portable information terminal or a user thereof has approached; and

said operation conduction unit conducts said prescribed operation when said first authentication is succeeded and said control command is received by said control command reception unit, and said approach detector has detected approach within a prescribed distance.

6. The authentication processing system according to claim 5, wherein said approach detector is a contact detection sensor which detects that the user of said portable information terminal has contacted said terminal authentication apparatus or said authentication operation conduction apparatus.

7. The authentication processing system according to claim 5, wherein at least one of said portable information terminal and said terminal authentication apparatus has an interval controller which controls at least one of said first, second and third time intervals so that said third time interval is longer than said first time interval.

8. The authentication processing system according to claim 5, wherein at least one of said portable information terminal and said terminal authentication apparatus has a battery monitor which detects containing electric capacity of a battery; and

said interval controller controls at least one of said first, second and third time intervals so that said first and second time intervals are equal to each other, or said third time interval is longer than said first time interval, in accordance with the remaining electric capacity of the battery detected by said battery monitor.

9. The authentication processing system according to claim 8, wherein at least one of said portable information terminal and said terminal authentication apparatus has a time measurement unit configured to measure a time elapsed from when it became impossible to detect a communication partner, or a time elapsed from when the wireless link with said terminal authentication apparatus is cut off; and

said interval controller controls at least one of saidfirst, second and third time intervals so that said first and second time intervals are equal to each other, or said third time interval is longer than said first time interval.

10. The authentication processing system according to claim 1, wherein said portable information terminal has a third authentication unit configured to conduct a second authentication with said terminal authentication apparatus after said terminal authentication apparatus has transmitted said control command to said operation apparatus; and

said terminal authentication apparatus has a fourth authentication unit configured to conduct said second authentication with said portable information terminal after transmitting said control command to said operation apparatus.

11. The authentication processing system according to claim 10, wherein said first authentication is a link authentication of Bluetooth; and

said second authentication is an authentication by an authentication protocol upper than a link of Bluetooth.

12. The authentication processing system according to claim 1, wherein said prescribed operation is to lock and unlock a door of a vehicle.

13. An authentication apparatus, comprising:

an existence confirmation signal receiver which in order to receive an existence confirmation signal outputted from a portable information terminal at a first time interval, is set to a reception mode capable of receiving said existence confirmation signal at a second time interval, only during a third time interval equal to or longer than said first time interval;

an existence notice signal transmitter which transmits said existence notice signal serving as response of said existence confirmation signal to said portable information terminal when said existence notice signal is received;

a link connection unit configured to establish a wireless link with said portable information terminal after said existence notice signal has been received by said portable information terminal;

an authentication unit configured to conduct authentication with said portable information terminal through said wireless link; and

a control command transmitter which transmits a control command when said authentication has been succeeded.

14. The authentication apparatus according to claim 13, further comprising a distance detection unit configured to detect a distance between said portable information terminal and said terminal authentication apparatus,

wherein said control command transmission unit transmits said control command to said operation apparatus when said first authentication is succeeded and the distance between said portable information terminal and said terminal authentication apparatus is equal to or less than a prescribed value.

15. The authentication apparatus according to claim 13, further comprising an interval controller which controls at least one of said first, second and third time intervals so that said third time interval is longer than said first time interval.

16. The authentication apparatus according to claim 15, further comprising a battery monitor which detects remaining electric capacity of a battery,

wherein said interval controller controls at least one of said first, second and third time intervals so that said first and second time intervals are equal to each other, or said third time interval is longer than said first time interval, in accordance with the remaining electric capacity of the battery detected by said battery monitor.

17. The authentication apparatus according to claim 16, further comprising a time measurement unit configured to measure a time elapsed from when it became impossible to detect a communication partner, or a time elapsed from when the wireless link with said terminal authentication apparatus is cut off,

wherein said interval controller controls at least one of said first, second and third time intervals so that said first and second time intervals are equal to each other, or said third time interval is longer than said first time interval,

18. The authentication apparatus according to claim 13, wherein said prescribed operation is to lock and unlock a door of a vehicle.

19. An authentication processing method of an authentication processing system comprising a portable information terminal; a terminal authentication apparatus which conducts authentication processing by air; and an operation apparatus which conducts a prescribed operation when said terminal authentication apparatus has succeeded in authentication with said portable information terminal,

wherein said portable information terminal includes:

transmitting an existence confirmation signal to confirm whether or not said terminal authentication apparatus exists, at a first time interval;

receiving an existence notice signal transmitted from said terminal authentication apparatus in response to said existence confirmation signal; establishing a wireless link with said terminal authentication apparatus which has transmitted said existence notice signal when said existence notice signal is received; and conducting a first authentication with said terminal authentication apparatus through said wireless link,

wherein said terminal authentication apparatus includes:

setting to a reception mode capable of receiving said existence confirmation signal at a second time interval only during a third time interval equal to or longer than said first time interval; transmitting said existence notice signal serving as response of said existence confirmation signal to said portable information terminal when said existence confirmation signal is received; establishing a wireless link with said portable information terminal after said portable information terminal receives said existence notice signal; conducting the authentication with said portable information terminal through said wireless link; and transmitting a control comnand for said operation apparatus when the authentication is succeeded,

wherein said operation apparatus includes:

receiving said control command; and conducting said prescribed operation based on said control command.

20. An authentication processing program, allows a computer to execute the steps of:

in order to an existence confirmation signal outputted from a portable information terminal at first time interval, setting to a reception mode capable of receiving said existence confirmation signal at a second time interval only during a third time interval equal to or longer than said first time interval; transmitting said existence notice signal serving as response of said existence confirmation signal to said portable information terminal when said existence confirmation signal is received; establishing a wireless link with saidportable information terminal after said portable information terminal receives said existence notice signal; conducting the authentication with said portable information terminal through said wireless link; and transmitting a, control command for said operation apparatus when the authentication is succeeded, in order to allow said operation apparatus to conduct a prescribed operation.

FIG. 1

3 ENTRY TERMINAL

32 ENTRY UNIT

31 CONTROL COMMAND RECEPTION UNIT

25 CONTROL COMMAND TRANSMISSION UNIT

21 EXISTENCE CONFIRMATION SIGNAL RECEPTION UNIT

22 EXISTENCE NOTICE SIGNAL TRANSMISSION UNIT

23 LINK CONNECTION UNIT

24 SECOND AUTHENTICATION UNIT

2 TERMINAL AUTHENTICATION MODULE

1 PORTABLE INFORMATION TERMINAL

11 EXISTENCE CONFIRMATION SIGNAL TRANSMISSION UNIT

12 EXISTENCE NOTICE SIGNAL RECEPTION UNIT

13 LINK CONNECTION UNIT

14 FIRST AUTHENTICATION UNIT

PORTABLE INFORMATION TERMINAL

TERMINAL AUTHENTICATION MODULE

ENTRY TERMINAL

EXISTENCE CONFIRMATION SIGNAL

TIME INTERVAL #1

EXISTENCE CONFIRMATION SIGNAL

TIME INTERVAL #2

RECEPTION MODE PERIOD OF EXISTENCE CONFIRMATION SIGNAL

EXISTENCE CONFIRMATION SIGNAL

TIME INTERVAL #3

EXISTENCE NOTICE SIGNAL

WIRELESS LINK CONNECTION

BIDIRECTIONAL AUTHENTICATION

CONTROL SIGNAL

ENTRY OPERATION

F I G. 2

EP 1 443 471 A2

RADIO WAVE
ARRIVAL RANGE

TERMINAL
AUTHENTICATION
MODULE

REPRESENTATIVE
RADIUS

MOVING SPEED

PORTABLE
INFORMATION
TERMINAL

FIG. 3

EP 1 443 471 A2

**ENTRY TERMINAL** — 3

- ENTRY UNIT — 32
- CONTROL COMMAND RECEPTION UNIT — 31

**PORTABLE INFORMATION TERMINAL** — 1

- 16 — EXISTENCE NOTICE SIGNAL TRANSMISSION UNIT
- 15 — EXISTENCE CONFIRMATION SIGNAL RECEPTION UNIT
- 13 — LINK CONNECTION UNIT
- 14 — FIRST AUTHENTICATION UNIT

- 25 — CONTROL COMMAND TRANSMISSION UNIT
- EXISTENCE CONFIRMATION TRANSMISSION UNIT — 26
- EXISTENCE NOTICE SIGNAL RECEPTION UNIT — 27
- LINK CONNECTION UNIT — 23
- 24 — SECOND AUTHENTICATION UNIT
- 2 — TERMINAL AUTHENTICATION MODULE

FIG. 4

**3** ENTRY TERMINAL

ENTRY UNIT — 32

CONTROL COMMAND
RECEPTION UNIT — 31

**1** PORTABLE INFORMATION
TERMINAL

11 — EXISTENCE
CONFIRMATION SIGNAL
TRANSMISSION UNIT

12 — EXISTENCE
NOTICE SIGNAL
RECEPTION UNIT

13 — LINK
CONNECTION UNIT

FIRST
AUTHENTICATION UNIT

14

25 — CONTROL COMMAND
TRANSMISSION UNIT

EXISTENCE
CONFIRMATION SIGNAL
RECEPTION UNIT — 21

EXISTENCE NOTICE
SIGNAL TRANSMISSION
UNIT — 22

LINK
CONNECTION UNIT — 23

RADIO SIGNAL
INTENSITY
MEASUREMENT UNIT — 28

24 — SECOND
AUTHENTICATION UNIT

**2** TERMINAL AUTHENTICATION
MODULE

FIG. 5

FIG. 6

EP 1 443 471 A2

FIG. 7

ENTRY TERMINAL 3

ENTRY UNIT — 32

CONTROL COMMAND RECEPTION UNIT — 31

PORTABLE INFORMATION TERMINAL 1

17 BATTERY

BATTERY MONITOR UNIT

18

TIMER

43

EXISTENCE CONFIRMATION SIGNAL TRANSMISSION UNIT — 11

EXISTENCE NOTICE SIGNAL RECEPTION UNIT — 12

INTERVAL CONTROL UNIT — 19

LINK CONNECTION UNIT — 13

FIRST AUTHENTICATION UNIT

14

CONTROL COMMAND TRANSMISSION UNIT — 25

EXISTENCE CONFIRMATION SIGNAL RECEPTION UNIT — 21

EXISTENCE NOTICE SIGNAL TRANSMISSION UNIT — 22

INTERVAL CONTROL UNIT — 42

TIMER 44

LINK CONNECTION UNIT — 23

RADIO SIGNAL INTENSITY MEASUREMENT UNIT — 28

SECOND AUTHENTICATION UNIT — 24

BATTERY MONITOR UNIT — 41

BATTERY

29

TERMINAL AUTHENTICATION MODULE 2

EP 1 443 471 A2

START

S1 — WIRELESS LINK IS IN CONNECTION?

YES

NO

CONFIRM BATTERY CHARGING RATIO — S2

CHARGING RATIO > THRESHOLD VAVLUE? — S3

NO

YES

S6 — TRANSMISSION TIME INTERVAL =T2?

NO

S4 — TRANSMISSION TIME INTERVAL =T1?

NO

YES

S7 — EXISTENCE CONFIRMATION SIGNAL TRANSMISSION TIME INTERVAL=T2

S5 — EXISTENCE CONFIRMATION SIGNAL TRANSMISSION TIME INTERVAL=T1

FIG. 8

FIG. 9

FIG. 10

3 ENTRY TERMINAL

ENTRY UNIT — 32

CONTROL COMMAND RECEPTION UNIT — 31

1 PORTABLE INFORMATION TERMINAL

EXISTENCE CONFIRMATION SIGNAL TRANSMISSION UNIT — 11

EXISTENCE NOTICE SIGNAL RECEPTION UNIT — 12

LINK CONNECTION UNIT — 13

FIRST AUTHENTICATION UNIT — 14

THIRD AUTHENTICATION UNIT — 44

47 — CONTACT TYPE APPROACH SENSING SENSER

CONTROL COMMAND TRANSMISSION UNIT

25

21 — EXISTENCE CONFIRMATION SIGNAL RECEPTION UNIT

22 — EXISTENCE NOTICE SIGNAL TRANSMISSION UNIT

LINK CONNECTION UNIT — 23

24

SECOND AUTHENTICATION UNIT

FOURTH AUTHENTICATION UNIT

46

2 TERMINAL AUTHENTICATION MODULE

FIG. 11

EP 1 443 471 A2